**Europäisches Patentamt**

**European Patent Office**

**Office européen des brevets**

(11) Veröffentlichungsnummer: **0 100 474**

**A1**

(12) # EUROPÄISCHE PATENTANMELDUNG

(21) Anmeldenummer: **83106906.7**

(22) Anmeldetag: **14.07.83**

(51) Int. Cl.³: **H 02 K 15/12**
**H 01 B 19/02**

(30) Priorität: **09.08.82 DE 3229652**

(43) Veröffentlichungstag der Anmeldung:
**15.02.84 Patentblatt 84/7**

(84) Benannte Vertragsstaaten:
**AT BE CH DE FR GB IT LI NL SE**

(71) Anmelder: **BASF Farben + Fasern Aktiengesellschaft**
**Am Neumarkt 30**
**D-2000 Hamburg 70(DE)**

(72) Erfinder: **Hegemann, Günther, Dr. Dipl.-Chem.**
**Andreasstrasse 23**
**D-2000 Hamburg 60(DE)**

(74) Vertreter: **Habbel, Hans-Georg, Dipl.-Ing.**
**Postfach 3429 Am Kanonengraben 11**
**D-4400 Münster(DE)**

(54) Verfahren zum Imprägnieren oder Beschichten von elektrischen oder elektronischen Bauteilen.

(57) Die Erfindung betrifft ein Verfahren zum Imprägnieren oder Beschichten von Wicklungen elektrischer Maschinen, Teilen hiervon oder elektronischen Bauelementen und/oder Schaltungen mit strukturviskosen bzw. thixotropen lösungsmittelfreien Reaktionsharzen im Tauchverfahren. Das Reaktionsharz wird während des Tauchens mit Ultraschall beaufschlagt.

EP 0 100 474 A1

Croydon Printing Company Ltd.

PAT 82 865
14.07.1982

BASF Farben + Fasern Aktiengesellschaft, Hamburg

Verfahren zum Imprägnieren oder Beschichten von elektrischen oder elektronischen Bauteilen

Die Erfindung betrifft ein Verfahren zum Imprägnieren oder Beschichten von Wicklungen elektrischer Maschinen, Teilen hiervon oder elektronischen Bauelementen und/oder Schaltungen mit strukturviskosen bzw. thixotropen lösungsmittelfreien Reaktionsharzen im Tauchverfahren.

Es ist bekannt, Wicklungen elektrischer Maschinen, beispielsweise Statoren von Elektromotoren oder Transformatoren, im Tauchverfahren zu imprägnieren. Die Teile werden hierzu in härtbare Reaktionsharze getaucht, und nach dem Austauchen wird nach Durchlaufen einer Abdunst- und Abtropfzone das Reaktionsharz in einem Ofen gehärtet. Als Reaktionsharze werden häufig ungesättigte Polyesterharze oder Polyesterimidharze verwendet. Diese Harze enthalten üblicherweise Styrol oder ähnliche Verbindungen. Da das Styrol beim Aushärten copolymerisiert, werden diese Systeme als lösungsmittelfrei bezeichnet, obwohl die Polyesterharze in dem Styrol gelöst vorliegen. Weiterhin ist es bekannt, elektronische Bauelemente oder vollständige Schaltungen mit derartigen Harzen im Tauchverfahren zu beschichten.

Zur Verringerung der Abtropfverluste in der Abtropfzone und im Ofen werden den Harzen häufig mineralische Füllstoffe zugesetzt, die die rheologischen Eigenschaften der Harze beeinflussen. So kann man durch Zusatz von Mikrodolomit, Quarzmehl, Aluminiumhydroxid oder pyrogener Kieselsäure Strukturviskosität bzw. Thixotropie erreichen.

Durch diese Zusatzstoffe werden zwar vorteilhaft die Abtropfverluste verringert, nachteilig nimmt jedoch auch die Grundviskosität der Reaktionsharze stark zu. Dies führt einerseits zu häufig unerwünscht hohen Schichtdikken, und andererseits wird hierdurch das Eindringvermögen der Harze in kleine Öffnungen und Vertiefungen der zu imprägnierenden bzw. zu beschichtenden Bauteile verschlechtert, so daß es bei feinstrukturierten Teilen zu unzureichender Benetzung kommt. Bedingt durch die große Schichtdicke bilden sich am unteren Rand der getauchten Bauteile auch Wulste durch Herablaufen des Harzes aus. Ein weiterer Nachteil liegt darin, daß die Bauteile relativ lange, beispielsweise je nach Größe 10 bis 30 Minuten im eingetauchten Zustand verbleiben müssen, da bei den viskosen Harzen Luftblasen nur sehr langsam entweichen.

Es ist Aufgabe der Erfindung, diese Nachteile des Standes der Technik zu vermeiden und ein Verfahren zum Imprägnieren oder Beschichten von elektrischen oder elektronischen Bauteilen mit strukturviskosen bzw. thixotropen lösungsmittelfreien Reaktionsharzen zu schaffen, bei dem einerseits geringe Schichtdicken erzielt werden können und andererseits die Harze vollständig in Öffnungen und Hohlräume der Bauteile eindringen. Wulstbildung am unteren Rand der Bauteile soll vermieden werden, und die Eintauchzeiten sollen reduziert werden. Weiterhin sollen die Vorteile der Harze, die sich aus ihrer Strukturviskosität bzw. Thixotropie ergeben, erhalten bleiben.

Überraschenderweise wurde nun gefunden, daß diese Aufgabe dadurch gelöst werden kann, daß die Viskosität der verwendeten Reaktionsharze durch Einwirkung von Ultraschall reversibel herabgesetzt wird.

Gegenstand der Erfindung ist also ein Verfahren der eingangsgenannten Art, das dadurch gekennzeichnet ist, daß das Reaktionsharz während des Tauchens mit Ultraschall beaufschlagt wird. Das Verfahren ist sowohl bei Reaktionsharzen anwendbar, die durch Zusatz von mineralischen Füllstoffen strukturviskos bzw. thixotrop gemacht worden sind, als auch bei Reaktionsharzen, die diese rheologischen Eigenschaften aufgrund ihres molekularen Aufbaus besitzen.

Das erfindungsgemäße Verfahren wird folgendermaßen durchgeführt:
Das Reaktionsharz wird in einen Tauchbehälter eingefüllt, und eine Ultraschallquelle wird in das Harz eingebracht und eingeschaltet. Durch die Ultraschalleinwirkung sinkt die Viskosität des Harzes. Wenn die Viskosität ausreichend abgesunken ist, werden die zu imprägnierenden oder zu beschichtenden Bauteile je nach ihrer Größe mit einer Eintauchgeschwindigkeit von beispielsweise 50 bis 500 mm/Min. gesenkt. Die bis zum Eintauchen erforderliche Beschallungszeit und die erforderliche Ultraschalleistung hängen von der Art und Menge des Reaktionsharzes ab und sind durch Messung der Viskosität in Abhängigkeit von der Zeit und der gegebenen Leistung leicht zu ermitteln. Nach einer geeigneten Tauchzeit, d. h. wenn keine Luftblasen mehr auf der Oberfläche des Tauchbades erscheinen, werden die Bauteile mit einer Geschwindigkeit von beispielsweise 10 bis 500 mm/Min. ausgetaucht. Sobald das Bauteil keinen Kontakt mehr mit dem Badinhalt hat, entfällt die Ultraschallbeeinflussung des dem Bauteil anhaftenden Harzmaterials, und dieses gewinnt seine ursprüngliche, höhere Viskosität zurück. Die Ultraschallquelle kann also während des Austauchens eingeschaltet bleiben, so daß das Tauchbad sofort für weitere Tauchvorgänge wieder zur Verfügung steht.

Durch die Erfindung ist es möglich, ein strukturviskoses bzw. thixotropes Reaktionsharz mit einer hohen Ausgangsviskosität zu verwenden und trotzdem während des Tauchvorganges eine niedrige Viskosität im Tauchbad aufrechtzuerhalten. Hierdurch werden eine bessere Benetzung von feinstrukturierten Bauteilen und eine geringere Schichtdicke erreicht. Die Tauchzeit wird verkürzt, und es tritt keine Wulstbildung auf.

Im folgenden wird die Erfindung anhand von Ausführungsbeispielen näher erläutert:

Beispiel 1

Ein handelsübliches ungesättigtes Polyesterharz, das 40 Gewichts-% Aluminiumhydroxid, 0,1 Gewichts-% pyrogene Kieselsäure und als Härter 1 Gewichts-% tert.-Butylperbenzoat enthielt, wurde mit Styrol auf eine Viskosität von 2.000 mPas eingestellt. Von diesem Harz wurden 200 g in ein Ultraschallbad eingefüllt, das für Reinigungszwecke im Handel erhältlich ist. Das Harz wurde 20 Minuten mit einer Leistung von 700 Watt bei einer Frequenz von 35 kHz beschallt. Die Viskosität war nach dieser Zeit auf 800 mPas gesunken. Es wurde eine mit elektronischen Bauteilen bestückte Schaltung langsam in das Bad gesenkt und nach 5 Min. mit einer Geschwindigkeit von 10 mm/Min. ausgetaucht. Nach einer Abtropfzeit von 10 Min. wurde der Überzug im Ofen gehärtet. Es ergab sich ein Überzug mit einer gleichmäßigen Schichtdicke von 50 /um. Es trat keine Wulstbildung am unteren Rand der Schaltung auf. Nach Abschalten der Ultraschallquelle erreichte das in dem Tauchbehälter befindliche Harz wieder seine ursprüngliche Viskosität.

Vergleichsbeispiel:
Mit dem Material des Beispiels 1 wurde eine weitere Tauchbeschichtung vorgenommen, wobei das Reaktionsharz jedoch nicht mit Ultraschall beaufschlagt wurde. Die

5

resultierende Beschichtung wies eine ungleichmäßige von oben nach unten zunehmende Schichtdicke von durchschnittlich ca. 200 /um auf, und am unteren Rand trat ein Wulst auf.

Beispiel 2:

Es wurde ein ungesättigter Polyester mit einer molekularstrukturbedingten Fließannomalie aus 1 Mol Trimelitsäureanhydrid, 5,8 Mol Neopentylglykol, 0,2 Mol endständig hydroxyliertem Polybutadien, 6 Mol Maleinsäureanhydrid und 3 Mol des Reaktionsproduktes aus 1 Mol Tetrahydrophthalsäureanhydrid und 1 Mol Monoethanolamin hergestellt. Das erhaltene Produkt wurde in Styrol gelöst und mit Styrol auf eine Viskosität von ca. 200 mPas eingestellt. Das erhaltene Harz wurde mit 1 Gewichts-% tert.-Butylperbenzoat als Härter versetzt. In gleicher Weise wie im Beispiel 1 wurden 200 g des Harzes 20 Min. beschallt. Die Viskosität fiel hierbei auf 100 mPas ab. Nach Erreichen dieser Viskosität wurden Motorettenspulen, die aus 75 Windungen eines 1 mm starken Kupferdrahtes bestanden, in das Harz getaucht. Die Tauchzeit betrug 8 Min., und nach einer Abtropfzeit von 15 Min. wurde eine Stunde bei 140 $^{o}$C gehärtet. Es resultierten Spulen mit einer ausgezeichneten Imprägnierung.

Nach Abschalten des Ultraschalls stieg die Viskosität des Harzes in dem Tauchbad wieder auf 200 mPas.

Patentanspruch:

Verfahren zum Imprägnieren oder Beschichten von Wicklungen elektrischer Maschinen, Teilen hiervon oder elektronischen Bauelementen und/oder Schaltungen mit strukturviskosen bzw. thixotropen lösungsmittelfreien Reaktionsharzen im Tauchverfahren, dadurch gekennzeichnet, daß das Reaktionsharz während des Tauchens mit Ultraschall beaufschlagt wird.

**0100474**

Nummer der Anmeldung

Europäisches
Patentamt

# EUROPÄISCHER RECHERCHENBERICHT

| | EINSCHLÄGIGE DOKUMENTE | | EP 83106906.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | <u>DE - A1 - 1 809 825</u> (HERBERTS) <br><br> * Ansprüche; Seite 1, Zeile 6 – Seite 2, letzte Zeile * <br><br> ---- | 1 | H 02 K 15/12 <br> H 01 B 19/02 |

|  |  |
|---|---|
| | RECHERCHIERTE SACHGEBIETE (Int. Cl. ³) |
| | H 01 K 15/00 |

Der vorliegende Recherchenbericht wurde für alle Patentansprüche erstellt.

| Recherchenort | Abschlußdatum der Recherche | Prüfer |
|---|---|---|
| WIEN | 08-09-1983 | KUTZELNIGG |